Europäisches Patentamt

European Patent Office

Office européen des brevets

(19)

(11) Numéro de publication: **0 263 064**
**A1**

(12) **DEMANDE DE BREVET EUROPEEN**

(21) Numéro de dépôt: **87810530.3**

(22) Date de dépôt: **15.09.87**

(51) Int. Cl.⁴: **G 04 G 1/00**
G 01 S 13/02, G 07 C 9/00

(30) Priorité: **17.09.86 CH 3717/86**

(43) Date de publication de la demande:
**06.04.88 Bulletin 88/14**

(84) Etats contractants désignés:
**CH DE FR GB IT LI**

(71) Demandeur: **R. Audemars SA**
**Via Casserinetta 28**
**CH-6902 Lugano (CH)**

(72) Inventeur: **Hefti, Aldo**
**Via Longhena**
**CH-6710 Biasca (CH)**

(74) Mandataire: **Seehof, Michel et al**
**c/o AMMANN INGENIEURS-CONSEILS EN PROPRIETE**
**INTELLECTUELLE SA BERNE Schwarztorstrasse 31**
**CH-3001 Berne (CH)**

(54) **Dispositif électronique d'identification, plus particulièrement pour montre.**

(57) La montre (2) comprend un récepteur-émetteur (9) couplé à une bobine de réception-émission (10) recevant un signal d'interrogation (11) venant de l'extérieur. En réponse à ce signal, la montre (2) émet par l'intermédiaire d'une bobine de réception-émission (10) un signal codé (12) l'identifiant, ce signal codé étant susceptible d'être reçu et décodé à l'extérieur de la montre (2). Le récepteur-émetteur (9) est un circuit intégré et il peut être passif, c'est-à-dire ne nécessiter aucune alimentation ou actif et alors être alimenté par une source d'énergie propre ou par la source d'énergie (13) de la montre.

FIG.1

EP 0 263 064 A1

**Description**

DISPOSITIF ELECTRONIQUE D'IDENTIFICATION, PLUS PARTICULIEREMENT POUR MONTRE

La présente invention concerne un dispositif électronique d'identification, notamment pour montres, mouvements de montres mécaniques ou électroniques ou boîtes de montres.

L'identification de mouvements de montre ou de montres a été effectué pendant longtemps à l'aide de numéros gravés sur une des pièces constitutives du mouvement de la montre, numéros qui pouvaient même être reportés sur la boîte ou le fond de la boîte de montre.

Un tel numéro d'identification trouve sa justification par exemple en fabrication, lorsque la montre terminée doit subir des tests individuels destinés à caractériser la montre (performances, qualités, etc.) ainsi que par exemple pour le service après vente afin de retrouver les caractéristiques initiales de la montre et par exemple pour permettre une identification en cas de contrefaçon.

Le principe d'identification par numéros gravés dans la montre est cependant devenu incompatible avec les moyens modernes de gestion, la lecture et les relevés (manuels) de ces numéros étant difficilement automatisables. Ces raisons ont conduit à l'abandon plus ou moins généralisé de l'identification des mouvements. Pour certaines classes de qualité de montres tout au moins, ce manque d'identification est ressenti comme un handicap, pour les raisons mentionnées ci-dessus.

En conséquence, le but de la présente invention est de réaliser un dispositif utilisable notamment pour une montre, permettant une identification électronique de celle-ci, susceptible d'être automatisée et compatible avec les moyens modernes de gestion, par exemple par ordinateur.

Pour atteindre ce but, le dispositif selon l'invention est réalisé comme décrit dans les revendications. L'émission par la montre d'un signal codé d'identification en réponse au signal d'interrogation d'un émetteur excitateur extérieur permet une identification facile de la montre lorsque le signal codé émis par celle-ci est reçu par un récepteur-decodeur extérieur à affichage digital. D'autre part, la programmation de l'électronique d'identification dans la montre est facilement automatisable et l'information codée émise peut être lue et traitée par un ordinateur.

L'invention va être décrite plus en détail ci-après à l'aide d'exemples d'exécution illustrés dans le dessin.

La figure 1 montre une première forme d'exécution du dispositif selon l'invention,

La figure 2 montre une deuxième forme d'exécution du dispositif selon l'invention,

La figure 3 montre une troisième forme d'exécution du dispositif selon l'invention,

La figure 4 montre le principe de la création du signal d'interrogation,

La figure 5 montre le principe de l'interraction avec la montre,

La figure 6 montre le principe des circuits logiques de la montre, et

La figure 7 montre l'identification du signal émis par la montre en réponse au signal d'interrogation.

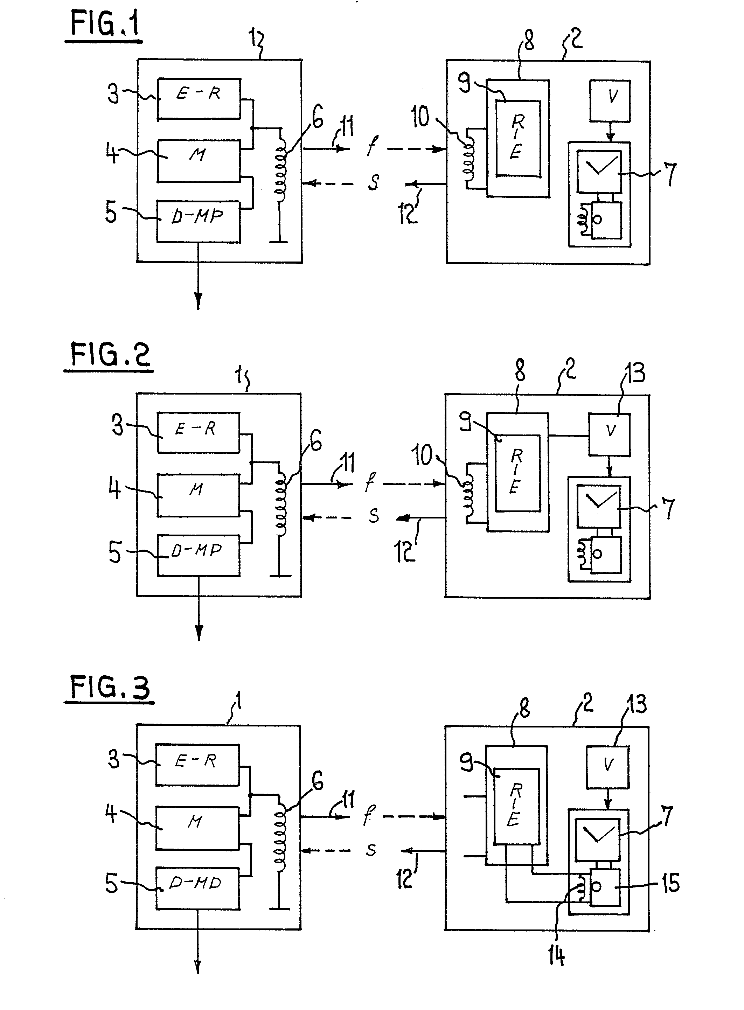

Dans la figure 1, l'élément 1 extérieur à la montre 2 est composé d'un émetteur-récepteur 3, d'un circuit de mise en forme du signal 4, d'un circuit de décodage 5 et d'une bobine d'émission-réception 6. La montre 2 comprend un mouvement d'horlogerie 7 mécanique ou électronique et un capteur passif 8 lui-même composé d'un récepteur-émetteur 9 et d'une bobine de réception-émission 10.

Le fonctionnement du système ci-dessus est le suivant.

L'élément 1 émet un signal de haute fréquence 11 par l'intermédiaire de la bobine 6. C'est le signal d'excitation ou d'interrogation. Si l'on approche la montre 2 de l'émetteur 1, le signal d'excitation est capté par la bobine de réception-émission 10 du récepteur-émetteur 9 de la montre. La partie émetteur de l'élément 9 est alors activée et, en réponse au signal d'excitation 11, elle émet, par la bobine 10 un signal formé d'un train d'impulsions 12, ce signal logique étant propre à la montre et identifiant celle-ci. Le signal 12 est capté par la bobine 6 de l'élément 1, mis en forme par le circuit 4 et décodé par le circuit 5 qui peut comprendre un microprocesseur traitant l'information personnalisée de la montre. Le signal de réponse 12 propre à la montre 2 est unique et il est réalisé par des moyens connus au niveau du circuit intégré de l'émetteur-récepteur 9, par exemple par des diviseurs de fréquence ajustables.

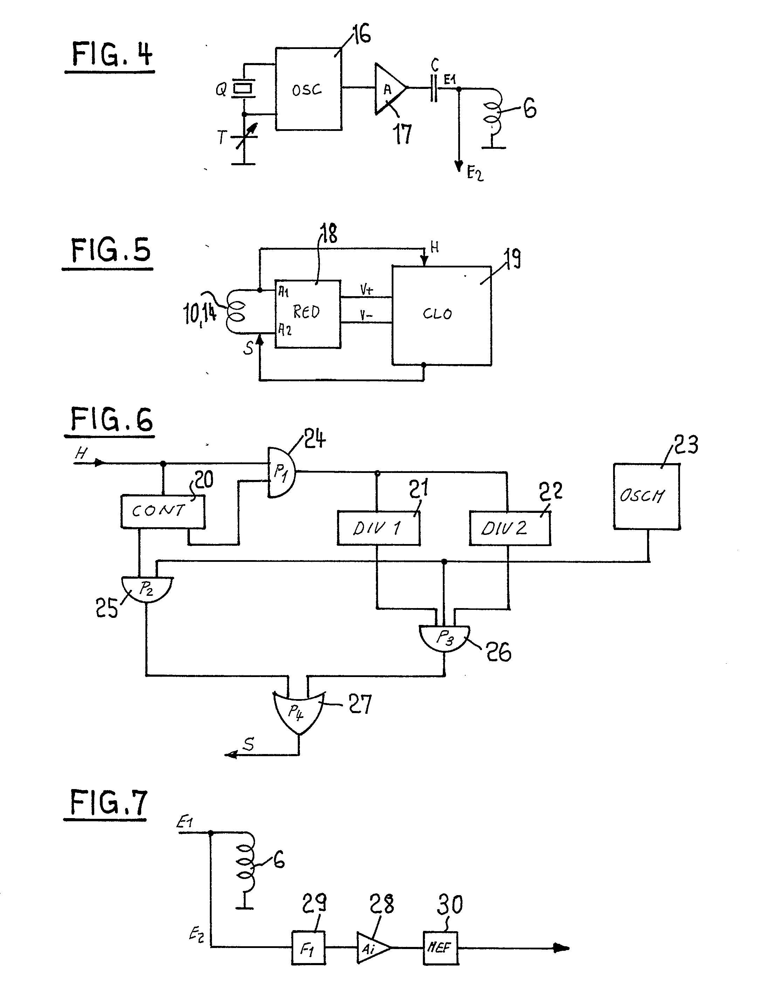

La figure 4 montre une solution possible pour créer le signal d'interrogation dans l'élément 1 extérieur à la montre 2. Un oscillateur 16 pouvant être piloté par un quartz Q et réglé par un trimmer T génère un signal alternatif de haute fréquence, par exemple de 500 kHz. Ce signal est préamplifié par l'amplificateur 17 et envoyé dans un circuit LC accordé à cette fréquence qui rayonne dans l'espace environnant.

La figure 5 illustre le traitement du signal d'interrogation 11 reçu par la montre 2. Lorsque la montre est placée dans le champ électromagnétique rayonné par l'émetteur 3, la bobine de réception-émission 10 ou 14 est parcourue par un courant alternatif de même fréquence. La figure montre que le signal capté est d'une part appliqué aux entrées A1 et A2 d'un redresseur 18 délivrant à ses bornes de sortie V+ et V- une tension continue. Cette tension continue est utilisée comme tension d'alimentation des circuits logiques 19 prévus pour l'identification de la montre. D'autre part, le signal capté par la bobine 10 ou 14 est aussi utilisé après mise en forme comme signal de commande H de ces mêmes circuits logiques 19.

La figure 6 montre les circuits logiques de la montre 2. Ces circuits sont constitués essentiellement par un compteur 20, deux diviseurs 21, 22 à taux de division ajustable, un oscillateur 23 et un système de portes 24 à 27. Le fonctionnement est le suivant: Lorsque la tension V (fig.5) générée par le champ électromagnétique capté dépasse le seuil de fonctionnement des circuits logiques de la montre, l'oscillateur 23 démarre et le compteur 20 commence à compter. Les sorties de ce compteur sont agencées de manière qu'au démarrage, la porte 24 est bloquée et la porte 25 ouverte. Le signal de l'oscillateur 23 est alors appliqué à travers les portes 25 et 27 à la sortie S de la porte 27 qui est aussi la sortie du récepteur-émetteur 9 de la montre sur la bobine 10, 14 qui l'émet de manière continue. La fréquence de ce signal est naturellemetn choisie de valeur différente de celle du signal d'interrogation, et cela pour la raison évidente d'en faciliter sa détection. Lorsque le compteur 20 atteint un nombre d'impulsions présélectionné, les sorties s'inversent, bloquant la porte 25 et ouvrant la porte 24. Ce temps pendant lequel la montre émet un signal de manière continue est mis à profit par le récepteur 3 qui se conditionne pour être prêt à effectuer une identification. Lorsque la porte 25 est bloquée et la porte 24 ouverte, le signal émis par la montre est interrompu et le restera tant que les sorties des diviseurs 21 et 22 n'ouvriront pas la porte 26. Les taux de division de ces diviseurs sont réglés en fabrication d'une manière différente d'une montre à l'autre. Ainsi, la porte 26 est ouverte et fermée pour le signal de l'oscillateur 23 de façon différente et chaque montre émettra un train de signaux particuliers en réponse à un signal excitateur ou interrogateur unique, ce qui permet une identification individuelle des montres produites. L'adjonction d'un ou plusieurs compteurs supplémentaires permet de faire varier les combinaisons possibles jusqu'à des nombres compatibles avec une production de montres en grande série.

La figure 7 montre l'identification du signal 12 émis par la montre 2. Le signal émis par la montre est détecté par la bobine 6 qui l'envoie par la borne E2 à travers une chaîne d'amplificateurs 28, filtres accordés 29 et mise en forme 30 qui le débarrassent de toute composante parasite, à une unité de traitement pouvant comprendre un microprocesseur d'identification de la montre. Le numéro d'identification peut être affiché sur un affichage digital commandé par le microprocesseur.

La figure 2 décrit un dispositif dans lequel l'élément capteur 8 est actif, c'est-à-dire qu'il nécessite une source d'énergie 13 pour son fonctionnement. Cette source d'énergie peut être une source propre au capteur 8 ou être la source d'alimentation du mouvement d'horlogerie 7.

La figure 3 décrit un dispositif dans lequel la bobine de réception-émission de la montre est la bobine 14 du moteur 15 du mouvement d'horlogerie électronique 7 de la montre 2. Bien entendu, le capteur 8 de la figure 3 peut être passif ou actif.

Ce qui précède montre que le dispositif selon l'invention permet une identification électronique de montres qui est compatible avec les moyens modernes de gestion par ordinateur.

**Revendications**

1. Dispositif électronique d'identification, notamment pour montres, mouvements de montres mécaniques ou électroniques ou boîtes de montres, caractérisé en ce que la pièce à identifier (2) comporte un élément récepteur-émetteur (9) susceptible de recevoir un signal d'interrogation (11) émis de l'extérieur et d'émettre en réponse au signal d'interrogation un signal codé (12) d'identification susceptible d'être reçu et décodé à l'extérieur de la pièce à identifier (2).

2. Dispositif électronique d'identification, notamment pour montres, mouvements de montres mécaniques ou électroniques ou boîtes de montres, caractérisé en ce que la pièce à identifier (2) comporte un élément récepteur-émetteur (9) réagissant à un signal d'interrogation (11) émis par un émetteur-récepteur (3) extérieur à la pièce à identifier (2) par l'émission d'un signal codé (12) identifiant ladite pièce (2), le dispositif comprenant en outre un récepteur-décodeur (3,6) extérieur à la pièce à identifier (2) permettant d'identifier cette dernière lorsqu'il reçoit le signal codé (12).

3. Dispositif selon la revendication 1, caractérisé en ce que l'élément récepteur-émetteur (9) de la pièce à identifier (2) est un élément passif ne nécessitant aucun apport d'énergie pour réagir au signal d'interrogation et émettre son propre signal codé d'identification (12).

4. Dispositif électronique d'identification d'une montre électronique selon la revendication 1, caractérisé en ce que l'élément récepteur-émetteur (9) de la montre (2) est un élément actif recevant l'énergie nécessaire à son fonctionnement de la source d'énergie (13) de la montre (2).

5. Dispositif selon la revendication 1, caractérisé en ce que l'élément récepteur-émetteur (9) de la pièce à identifier (2) est un élément actif alimenté par une source d'énergie propre logée dans la pièce à identifier (2).

6. Dispositif selon l'une des revendications 1 à 5, caractérisé en ce que le signal codé d'identification (12) émis par le récepteur-émetteur (9) de la pièce à identifier (2) est formé d'une suite de signaux logiques.

7. Dispositif d'identification d'une montre selon l'une des revendication 1 à 6, caractérisé en ce que l'élément récepteur-émetteur (9) de la montre (2) comprend un circuit intégré couplé à une bobine (10,14), ces éléments pouvant être montés dans le mouvement de la montre ou à l'intérieur de la boîte de montre.

8. Dispositif d'identification d'une montre selon l'une des revendications 1 à 7, caractérisé en ce qu'au moins une partie des éléments du récepteur-émetteur (9) de la montre (2) sont intégrés au circuit de la montre.

9. Dispositif électronique d'identification d'une un montre électronique selon l'une des revendications 1 à 8, la montre comprenant un affichage analogique par moteur pas à pas, caractérisé en ce qu'au moins un des éléments constituants du moteur (15) participe à la formation du signal d'identification (12).

10. Dispositif selon la revendication 9, caractérisé en ce que la bobine de réception-émission du circuit de la montre (2) est la bobine (14) du moteur pas à pas (15).

0263064

## FIG.1

## FIG.2

## FIG.3

0263064

**FIG. 4**

**FIG.5**

**FIG.6**

**FIG.7**

# RAPPORT DE RECHERCHE EUROPEENNE

Office européen des brevets

Numero de la demande

EP 87 81 0530

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-3 222 349 (H. BERTHOLD) <br> * Page 6, ligne 26 - page 8, ligne 28 * | 1-6 | G 04 G 1/00 <br> G 01 S 13/02 <br> G 07 C 9/00 |
| Y | | 7,8 | |
| A | | 10 | |
| | --- | | |
| Y | PATENT ABSTRACTS OF JAPAN, vol. 4, no. 70 (P-12) [552], 23 mai 1980; & JP-A-55 36 764 (DAINI SEIKOSHA K.K.) 14-03-1980 <br> * En entier * | 7,8 | |
| | --- | | |
| A | EP-A-0 172 445 (ASULAB S.A.) <br> * Résumé * | 1,3 | |
| | --- | | |
| A | US-A-4 114 151 (P.R.M. DENNE) <br> * Figure 1 * | 1,3 | |
| | --- | | |
| A | GB-A-2 082 804 (TIMEX CORP.) <br> * Page 6, lignes 55-69; figures * | 1,9 | |
| | --- | | |
| A | EP-A-0 161 545 (ASULAB S.A.) | 7 | |
| | --- | | DOMAINES TECHNIQUES RECHERCHES (Int. Cl.4) |
| A | FR-A-2 180 349 (GRETAG AG) | 1 | |
| | --- | | |
| A | FR-A-2 522 850 (ELECTRONIQUE MARCEL DASSAULT) | 1 | G 04 G <br> G 04 C <br> G 07 C <br> G 07 F <br> G 01 S |
| | ----- | | |

Le présent rapport a été établi pour toutes les revendications

| Lieu de la recherche | Date d'achèvement de la recherche | Examinateur |
|---|---|---|
| LA HAYE | 22-12-1987 | EXELMANS U.G.J.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)